# EUROPÄISCHE PATENTANMELDUNG

(11) **EP 2 713 070 A2**
(43) Veröffentlichungstag der Anmeldung: **02.04.2014**
(21) Anmeldenummer: 13183354.3
(22) Anmeldetag: 06.09.2013
(51) Int. Cl.: F16D 23/14

(54) **Ausrücksystem**

(30) Priorität: 01.10.2012 DE 102012217885
(71) Anmelder: Schaeffler Technologies GmbH & Co. KG, 91074 Herzogenaurach (DE)
(72) Erfinder: Ahnert, Gerd, 77880 Sasbach (DE); Laigo, Jonathan, 67850 Offendorf (FR)

(57) **Zusammenfassung**

Die Erfindung betrifft ein Ausrücksystem zur Betätigung einer Kupplung, insbesondere für eine zwischen einem Motor und einem Getriebe vorzusehende Reibungskupplung, mit einem Betätigungslager (1), zur Betätigung der Kupplungsbetätigungsmittel, wie einer Tellerfeder/Tellerfederzungen (6), wobei das Betätigungslager sich an einem Gehäuse (5) abstützt und einen Lageraußenring (2), einen Lagerinnenring (3) und dazwischen angeordnete Wälzkörper (4) sowie einen ersten Druckring (7) aufweist, der an einer ersten Seite (6.1) der Tellerfederzungen anliegt, wobei das Betätigungslager erfindungsgemäß in Richtung zur zweiten Seite (6.2) der Tellerfederzungen einen Anschlag und zwischen dem Anschlag und der zweiten Seite eine erste Feder (9) aufweist derart, dass die Tellerfederzungen beidseitig abgestützt sind.

## Beschreibung

Die Erfindung betrifft ein Ausrücksystem zur Betätigung einer Kupplung, insbesondere für eine zwischen einem Motor und einem Getriebe vorzusehende Reibungskupplung, mit einem Betätigungslager zur Betätigung der Kupplungsbetätigungsmittel, wie Tellerfederzungen.

An herkömmlichen Kupplungsdruckplatten wird die Anpresskraft zur Momentenübertragung durch ein Federsystem (z.B. eine Tellerfeder und dabei deren Tellerfederzungen) aufgebracht. Normalerweise wird die gesamte Anpresskraft zur maximalen Momentenübertragung nur durch diese Feder hervorgerufen. Die Betätigungskraft zum Öffnen der Kupplung wird in entsprechender Richtung an den Tellerfederzungen aufgebracht.

Bekannt ist auch eine Variante, bei der die Anpresskraft durch eine Hebelwirkung (z.B. Tellerfederzungen) verstärkt wird. Durch aktive Betätigung der Tellerfederzungen entgegen der sonstigen Ausrückbewegung, wird hierbei die Anpresskraft erhöht. Weiterhin wird damit die Federkraft vermindert und folglich die maximale Ausrückkraft reduziert. Der maximale Kraftbetrag zur Betätigung der Kupplung sinkt. Es verringert sich somit die Bauteilbelastung (speziell auch am Ausrücklager). Dies ist nutzbringend für die Dimensionierung der Bauteile. Weiterhin sind verschiedene Varianten von Betätigungssystemen mit ziehenden, drückenden bzw. wechselnden Kraftrichtungen bekannt. Eine Variante wird in der Druckschrift DE 103 29 972 A1 (in den Figuren 3 und 4 und deren Beschreibung) dargelegt. Hierbei werden u. a. auch Lösungen für die Montage der Betätigungssysteme gezeigt.

Bei den bekannten Kupplungsbetätigungssystemen findet ein Wechsel der Betätigungskraftrichtung statt. Dabei können Spiele bzw. wechselnde Elastizitäten am Ausrücklager und den Kontakt-Stellen nachteilig wirksam werden. Dies muss z.B. in der Weg- Momenten- Kennlinie durch die Steuerung berücksichtigt werden.

Besonderer Nachteil ist aber, dass beim Kraftrichtungswechsel im Push-Pull-Betrieb mit wechselnder Kraftrichtung keine Vorlast vorhanden ist. Es ist somit die Gewährleistung der Funktion (Lebensdauer) z.B. des Betätigungslagers nicht gesichert.

Aufgabe der Erfindung ist es, ein Ausrücksystem zur Betätigung einer Kupplung zu entwickeln, bei der das auf die Tellerfederzungen der Kupplung wirkende Betätigungslager einen Kraftrichtungswechsel erlaubt und somit eine Axialkraft in beide Richtungen übertragen werden kann (im Push-Pull-Betrieb) und bei dem keine ständige Lagervorlast durch eine externe Einrichtung (z.B. Vorlastfeder) aufgebracht werden muss.

Diese Aufgabe wird erfindungsgemäß mit den kennzeichnenden Merkmalen des ersten Patentanspruchs gelöst.

Vorteilhafte Ausgestaltungen ergeben sich aus den Unteransprüchen.

Das Ausrücksystem zur Betätigung einer Kupplung, insbesondere für eine zwischen einem Motor und einem Getriebe vorzusehende Reibungskupplung, weist ein Betätigungslager zur Betätigung der Kupplungsbetätigungsmittel in Form einer Tellerfeder mit Tellerfederzungen auf, wobei das Betätigungslager sich an einem Gehäuse abstützt und einen Lageraußenring, einen Lagerinnenring und dazwischen angeordnete Wälzkörper sowie einen ersten Druckring aufweist, der an einer ersten Seite der Tellerfederzungen anliegt und dass das Betätigungslager erfindungsgemäß auf der zweiten Seite der Tellerfeder ein Anschlag und zwischen dem Anschlag und der zweiten Seite eine erste Feder aufweist derart, dass die Tellerfederzungen zwischen dem ersten Druckring und dem Anschlag mit der ersten Feder beidseitig abgestützt sind.

Durch diese konstruktive Ausgestaltung, bei der das Betätigungslager Kraftrichtungswechsel erlaubt, muss keine ständige Lagervorlast durch eine externe Einrichtung (z.B. Vorlastfeder) aufgebracht werden.

Für Kupplungsdruckplatten mit ziehender Betätigung ist durch die erfindungsgemäße Lösung eine beidseitige Betätigungskraftrichtung (Push- und Pull-Betrieb) möglich, wobei das Betätigungslager (speziell das Wälzlager und die Tellerfederzungenanbindung) immer eine Vorlast haben. Ausgenutzt wird hierbei, dass die Kombination aus einer beidseitigen Anbindung des Betätigungslagers an den Tellerfederzungen, einer Teilung der Wälzlagerfunktion und einem ersten Federelement einen ständig geschlossenen Kraftfluss zwischen den Bauteilen ermöglicht.

Dabei ist der Anschlag vorzugsweise an einem zweiten Druckring ausgebildet, der auf der Druckseite der Tellerfeder angeordnet ist, wobei zwischen dem zweiten Druckring und der zweiten Seite der Tellerfederzungen die erste Feder angeordnet ist, die sich am Druckring und an den Tellerfederzungen abstützt. Die Wälzkörper sind in wenigstens einem Wälzlager ausgebildet, wobei vorteilhafter Weise über die erste Feder eine Vorlast auf das/die Wälzlager wirkt. Über diesen zweiten Druckring ist auch in die umgekehrte Richtung (vom Gehäuse weg) eine Betätigung der Tellerfederzungen bzw. der Kupplungsdruckplatte möglich.

Der erste Druckring, die erste Feder und der zweite Druckring sitzen auf dem Lagerinnenring des Betätigungslagers und der Lageraußenring des Betätigungslagers ist mit dem Gehäuse gestellfest verbunden.

Durch die aus Richtung des Gehäuse vorhandene Reibung von Lagerinnenring, Wälzkörpern, zweiten Druckring, erster Feder, Tellerfederzungen, ersten Druckring ist lediglich ein sich an den ersten Druckring anschließender Verschluss zu montieren ist (z.B. Sicherungsring oder radial nach außen weisende Bördelung des Lagerinnenrings). Ebenfalls ist die Montage des Wälzlagers selbst vorteilhaft, wenn nicht zwei vollständige Innen- bzw. Lageraußenringe eingesetzt werden.

Weiterhin wird durch eine solche Reihung der Bauteile mit einem Federelement eine ständige Lagervorlast am Wälzlager vorhanden sein, auch wenn das Kupplungssystem keine Betätigungskraft hat (Nulldurchgang bei Kraftrichtungswechsel). Die Größe der Vorlast wird durch das interne Federelement bestimmt.

Es ist aber auch möglich, die beiden Ringteile durch einen axialen Anschlag auf eine feste Distanz zu halten und somit ein Mindestmaß an Spiel zu sichern (Leichtgängigkeit).

Der neu vorgeschlagene zweite Druckring kann ebenso wie der bisher verwendete erste Druckring vorteilhafter Weise als Blechteil gefertigt sein.

Zwischen Lageraußenring und Lagerinnenring ist wenigstens ein Wälzlager als ein zweiteiliges Schrägkugellager ausgebildet.

Der zweite Druckring kann auch auf ein zweites Wälzlager in Form eines Schrägkugellagers oder eines Axialnadellagers wirken.

Der Lagerinnenring des Betätigungslagers kann in einen radial innen liegenden Innenring und einen radial außen liegenden Innenring geteilt sein, wobei der radial außen liegende Innenring gleichzeitig den zweiten Druckring bildet, an dem sich die erste Feder abstützt und auch Teil des Wälzlagers ist.

Das Betätigungslager mit einem zweiten Druckring zur beidseitigen Betätigung der Tellerfederzungen weist ein erstes Schrägkugellager für die erste Betätigungskraftrichtung auf, welches zwischen dem Lageraußenring und dem radial innen liegenden Innenring sitzt, wobei das zweite Druckstück in Form des radial außen liegenden Außenrings vorteilhafter Weise auf ein zweites Wälzlager z.B. ein zweites Schrägkugellager wirkt. Die jeweils einseitige Wälzkörperanlage ermöglicht auch eine vorteilhafte Ausführung der Lager aus mehreren Blechteilen.

Alternativ zu einem zweiten Schrägkugellager kann auch ein Nadellager eingesetzt werden, welches zwischen Lageraußenring und radial außen liegenden Innenring des Lagerinnenrings sitzt.

Durch die ständig wirkende interne Vorlast bewirkt das erste Schrägkugellager die notwendige Koaxialität von Lagerinnenring und Lageraußenring.

Auch, wenn das Kupplungssystem keine Richtungswechsel der Betätigungskraft hat, bietet die Teilung des Lagerinnenringes (vorgenannt beschrieben) oder auch die Teilung des Lageraußenringes Vorteile. Durch die Reihung der Bauteile wird eine ständige Lagervorlast am Wälzlager vorhanden sein, auch wenn das Kupplungssystems keine Betätigungskraft aufbringt und somit keine Vorlast über das Betätigungssystem aufgebracht wird.

Weiterhin ist es möglich, dass der Lageraußenring des Betätigungslagers in einen radial innen liegenden Außenring und einen radial außen liegenden Außenring geteilt ist und dass auf den radial innen liegenden Außenring eine zweite Feder wirkt, die sich am Gehäuse abstützt.

In diesem Fall kann der Lagerinnenring einen Absatz aufweisen, an dem die erste Feder anliegt und dadurch mit einer Vorspannkraft auf die zweite Seite der Tellerfederzungen wirkt.

Die Größe der Vorlast wird durch das interne erste Federelement gesichert.

Gemäß einer weiteren Variante der Erfindung können der zweite Druckring und die erste Feder und somit der radial außen liegende Innenring und die Feder auch einteilig ausgebildet sein, wodurch die Anzahl der Bauteile reduziert wird.

Die Erfindung wird nachfolgend an Ausführungsbeispielen und zugehörigen Zeichnungen näher erläutert. Es zeigen:
- Figur 1: ein Betätigungslager 1 mit einem ersten und einem zweiten Druckring, zur beidseitigen Betätigung der Tellerfederzungen,
- Figur 2: den Kraftfluss gem. Figur 1 bei ziehender Betätigung (Tellerfederzungen werden in der Darstellung nach rechts beaufschlagt),
- Figur 3: den internen Kraftfluss der Lageranbindung, wenn keine Betätigungskraft anliegt,
- Figur 4: den Kraftfluss bei drückender Betätigung, z.B. nach einem Kraftrichtungswechsel,
- Figur 5: ein Betätigungslager mit einem ersten und zweiten Druckring und zwei Schrägkugellagern,
- Figur 6: ein Betätigungslager mit einem ersten und zweiten Druckring, einem Schrägkugellager und einem Axialkugellager,
- Figur 7: ein Betätigungslager mit einem ersten und zweiten Druckring, wobei der Druckring ein radial außen liegender Innenring eines geteilten Lagerinnenringes ist,
- Figur 8: ein Betätigungslager mit einem ersten und zweiten Druckring, wobei der Druckring ein radial außen liegender Innenring eines geteilten Lagerinnenringes ist und mit der ersten Feder einteilig ausgebildet ist,
- Figur 9: ein Betätigungslager mit einem ersten Druckring und einem Anschlag am Lagerinnenring, wobei der Lageraußenring in einen radial innen liegenden Außenring und einen radial außen liegenden Außenring geteilt ist und dass auf den radial innen liegenden Außenring eine zweite Feder wirkt, die sich am Gehäuse abstützt.

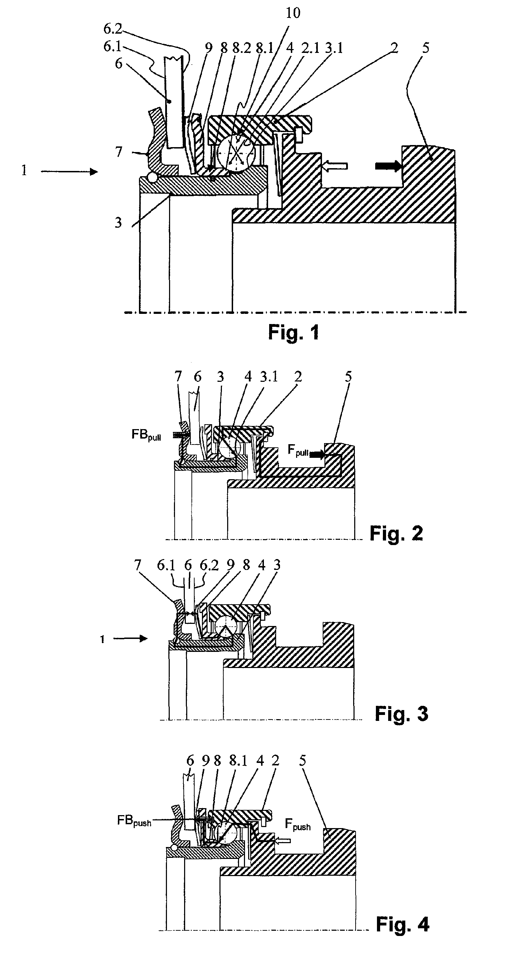

Das Ausrücksystem zur Betätigung einer Kupplung, weist gemäß der Figuren 1 bis 9 ein Betätigungslager 1 mit einem Lageraußenring 2 und einem Lagerinnenring 3 auf, wobei zwischen Lageraußenring 2 und Lagerinnenring 3 Wälzkörper 4 angeordnet sind. Der Lageraußenring 2 stützt sich gestellfest an einem Gehäuse 5 ab. Das Betätigungslager 1 dient zur Betätigung der Tellerfederzungen 6 einer nicht dargestellten Kupplung. Der Lagerinnenring 3 weist einen ersten Druckring 7 auf, der an einer ersten Seite 6.1 der Tellerfederzungen 6 anliegt.

Gemäß Figur 1 ist auf der zweiten Seite 6.2 der Tellerfederzungen 6 auf dem Lagerinnenring 3 und somit auf der Druckseite der Tellerfederzungen 6 ein zweiter Druckring 8 angeordnet. Zwischen dem zweiten Druckring 8 und der zweiten Seite 6.2 der Tellerfederzungen 6 stützt sich eine erste Feder 9 ab, die in Form einer Druckfeder ausgebildet ist.

In Ergänzung eines herkömmlichen ziehenden Betätigungslagers, bei dem lediglich ein erster Druckring 7 in eine Richtung eine Kraft auf die Teller-/Hebel-Feder ausübt, wird ein zweiter Druckring 8 eingesetzt, über den auch in die umgekehrte Richtung eine Betätigung der Kupplungsdruckplatte / bzw. der Tellerfederzungen 6 möglich ist, wozu die Tellerfederzungen 6 beidseitig abgestützt sind.

Es ist aus Figur 1 ersichtlich, dass durch die Reihung von Lagerinnenring 3, Wälzkörpern 4, zweitem Druckring 8, erster Feder 9, Tellerfederzungen 6, erstem Druckring 7 nur ein Verschluss 10 zu montieren ist (z.B. ein Sicherungsring, wie in Figur 1 dargestellt oder eine Bördelung).

Die Wälzkörper 4 bilden in Verbindung mit dem Lageraußenring 2 und dem Lagerinnenring 4 zumindest ein erstes Wälzlager L1 in Form eines Schrägkugellagers.

Dabei wird durch eine Reihung der Bauteile wie in Figur 1 dargestellt, mit der ersten Feder 9, eine ständige Lagervorlast am Wälzlager vorhanden sein, auch wenn das Kupplungssystems keine Betätigungskraft hat (Nulldurchgang bei Kraftrichtungswechsel).

Die Größe der Vorlast wird durch die interne erste Feder 9 bestimmt.

Es ist aber auch möglich den ersten und den zweiten Druckring 7, 8 einen axialen Anschlag auf eine feste Distanz zu halten (nicht dargestellt) und somit ein Mindestmaß an Spiel zu sichern (Leichtgängigkeit).

Der erste und der zweite Druckring 7, 8 werden bevorzugt als Blechteil gefertigt.

Der zweite Druckring 8 weist in Richtung zu den Wälzkörpern 4 eine Lauffläche 8.1 an einem sich auf dem Lagerinnenring 3 axial erstreckenden Bereich 8.2 und der Lagerinnenring 3 eine Lauffläche 3.1 auf und der Lageraußenring 2 ist mit einer Lauffläche 2.1 versehen. Das dadurch gebildete Wälzlager ist somit als zweiteiliges erstes Schrägkugellager 10 ausgebildet, was durch die Pfeile in den Wälzkörpern 4 angedeutet ist.

Ebenfalls ist die Montage des ersten Schrägkugellagers 10, welches die Wälzkörper 4 enthält, vorteilhaft, wenn nicht zwei vollständige Innen- bzw. Lageraußenringe eingesetzt werden.

In Figur 2 ist der Kraftfluss gem. Figur 1 bei ziehender Betätigung (Tellerfederzungen werden in der Darstellung nach rechts beaufschlagt) mittels einer fetten Linie eingezeichnet. Die über ein Betätigungselement (z.B. einen Nehmerzylinder) eingeleitete Kraft Fₚᵤₗₗ (bei ziehender Betätigung) wird über das Gehäuse 5, den Lageraußenring 2, die Wälzkörper 4, die Lauffläche 3.1, den Lagerinnenring 3 und den ersten Druckring 7 geleitet und dadurch die Tellerfederzungen 6 nach in der Darstellung in Pfeilrichtung nach rechts mit einer Betätigungskraft FBₚᵤₗₗ bei ziehender Betätigung beaufschlagt.

Figur 3 zeigt den internen Kraftfluss der Lageranbindung des Betätigungslagers 1, wenn keine Betätigungskraft anliegt. Es wirken der erste Druckring 7 und die sich am zweiten Druckring 8 abstützende zweite Feder 9 gegen die erste und zweite Seite 6.1, 6.2 der Tellerfederzungen 6 und der Kraftverlauf erfolgt von den Tellerfederzungen 6 über die zweite Feder 9, den zweiten Druckring 8, die Wälzkörper 4, den Lagerinnenring 3 und den ersten Druckring 7 wieder auf die Tellerfederzunge 6.

Der Kraftfluss bei drückender Betätigung, z.B. nach einem Kraftrichtungswechsel, ist aus Figur 4 ersichtlich. Die über ein Betätigungselement (z.B. einen Nehmerzylinder) eingeleitete Kraft Fₚᵤₛₕ (bei drückender Betätigung) wird über das Gehäuse 5, den Lageraußenring 2, die Wälzkörper 4, die Lauffläche 8.1, den zweiten Druckring 8 und die erste Feder 9 zu den Tellerfederzungen 6 geleitet und dadurch die Tellerfederzungen 6 in der Darstellung in Pfeilrichtung nach links mit einer Betätigungskraft FBₚᵤₛₕ bei drückender Betätigung beaufschlagt.

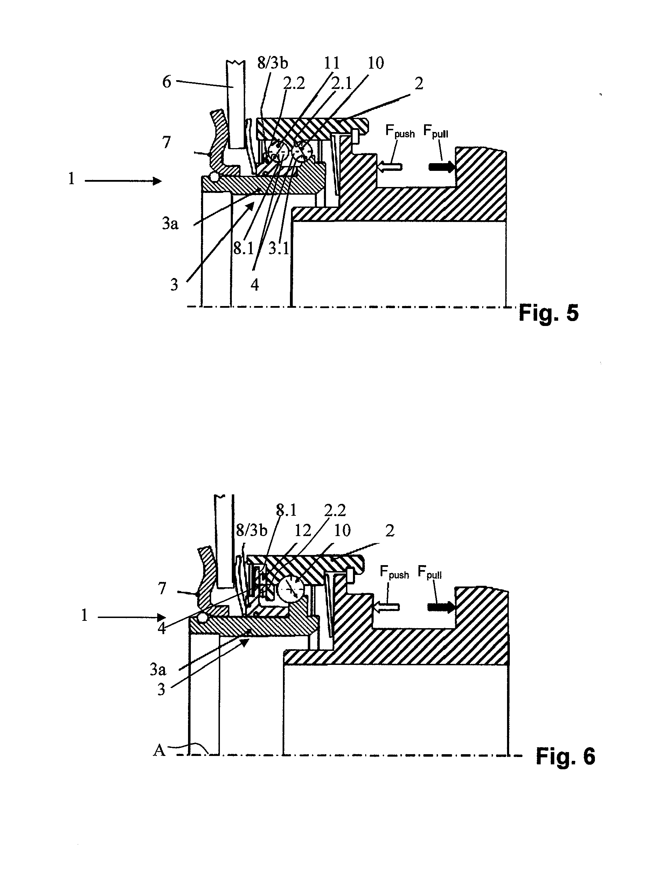

Figur 5 zeigt ein Betätigungslager 1 mit einem ersten und zweiten Druckring 7, 8 die beidseitig zu den Tellerfederzungen 6 angeordnet sind, wobei in Unterschied zu Figur 5 zusätzlich zu dem ersten Schrägkugellager 10 ein zweites Schrägkugellager 11 vorhanden ist.

Der Lagerinnenring 3 ist geteilt in einen radial innen liegenden Innenring 3a und einen radial außen liegenden Innenring 3b, wobei der radial außen liegende Innenring 3b gleichzeitig den zweiten Druckring 8 bildet, an dem sich die erste Feder 9 abstützt und der auch Teil des zweiten Schrägkugellagers 11 ist und dazu eine Lauffläche 8.1 aufweist. Der radial innen liegende Innenring 3a weist eine Lauffläche 3.1 auf. Der Außenring 3 weist eine erste Lauffläche 2.1 und eine zweite Lauffläche 2.2 auf.

Das erste Schrägkugellager 10 wird durch Wälzkörper 4 in Verbindung mit der ersten Lauffläche 2.1 des Lageraußenrings 2 und der Lauffläche 3.1 des Lagerinnenrings 3 an dessen radial innen liegendem Innenring 3a und das zweite Schrägkugellager 11 durch Wälzkörper 4 in

Verbindung mit der zweiten Lauffläche 2.2 des Lageraußenrings 2 und der Lauffläche 3.1 des zweiten Druckrings 8, der hier als radial außen liegender Innenring des Lagerinnenrings ausgebildet ist, gebildet.

Die jeweils einseitige Wälzkörperanlage des ersten und zweiten Schrägkugellagers 10, 11 ermöglicht auch eine vorteilhafte Ausführung der Lager aus mehreren Blechteilen.

Im Unterschied zu Figur 5 ist anstelle eines zweiten Schrägkugellagers gemäß Figur 6 ein A-xialnadellager 12 vorgesehen, dessen Wälzkörper 4 im Wesentlichen senkrecht zur Längsachse A des Ausrücksystems ausgerichtet sind, so dass die Lauffläche 8.1 des zweiten Druckrings 8 und die Lauffläche 2.2 des Lageraußenrings 2 ebenfalls im Wesentliche senkrecht ausgerichtet sind. Das erste Schrägkugellager 10 ist analog zu Figur 5 aufgebaut.

Durch die ständig wirkende interne Vorlast bewirkt das erste Schrägkugellager 10 die notwendige Koaxialität von Innen- und Außenring 3, 2.

Auch, wenn das Kupplungssystem keine Richtungswechsel der eingeleiteten Kraft Fₚᵤₛₕ, Fₚᵤₗₗ und somit der in den Figuren 5 und 6 nicht dargsstellten Betätigungskraft vollführt, bewirkt das erste Schrägkugellager 10 durch die ständig wirkende interne Vorlast die notwendige Koaxialität von Innen- und Außenring 3, 2. Auch, wenn das Kupplungssystem keine Richtungswechsel der Betätigungskraft hat, bietet die Teilung eines Lagerringes somit Vorteile. Durch die Reihung der Bauteile wird eine ständige Lagervorlast am Wälzlager vorhanden sein, auch wenn das Kupplungssystem keine Betätigungskraft hat (keine Vorlast des Betätigungssystems). Die Größe der Vorlast wird durch das interne Federelement 9 gesichert. Es ist ebenso auch möglich, den ersten und zweiten Druckring 7, 8 durch einen axialen Anschlag (nicht dargestellt) auf einer festen Distanz zu halten und somit ein Mindestmaß an Spiel zu sichern (Leichtgängigkeit).

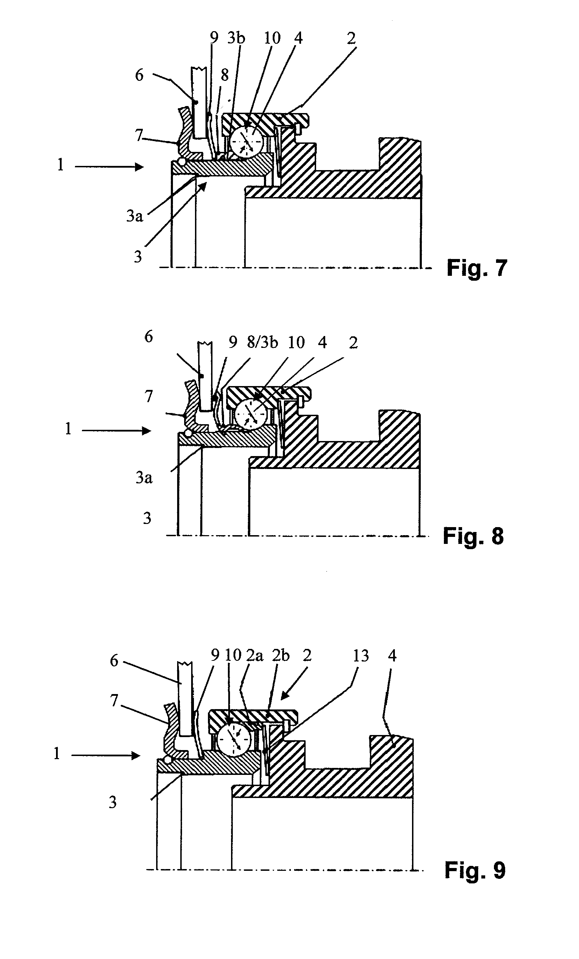

Figur 7 zeigt ein Betätigungslager 1 mit einem ersten und zweiten Druckring 7, 8, wobei der zweite Druckring 8 durch einen radial außen liegenden Innenring 3a eines geteilten Lagerinnenringes 3 gebildet wird,

In Figur 8 ist ein Betätigungslager 1 mit einem ersten und zweiten Druckring 7, 8 dargestellt, wobei der zweite Druckring 8 ein radial außen liegender Innenring 3b eines geteilten Lagerinnenringes 3 ist und mit der ersten Feder 9 einteilig ausgebildet ist,

Figur 9 zeigt ein Betätigungslager 1 mit einem ersten Druckring 7 und einem Anschlag 8' am Lagerinnenring 3, wobei der Lageraußenring 2 in einen radial innen liegenden Außenring 2a und einen radial außen liegenden Außenring 2b geteilt ist und dass auf den radial innen liegenden Außenring 2a eine zweite Feder 13 wirkt, die sich am Gehäuse 5 abstützt.

Es wird somit ein Ausrücksystem zur Verfügung gestellt, mit dem eine beidseitige Betätigungskraftrichtung möglich ist und das Betätigungslager (speziell das Wälzlager und die Tellerfederzungenanbindung) immer eine Vorlast haben.

Ausgenutzt wird hierbei, dass die Kombination aus einer beidseitigen Anbindung des Betätigungslagers 1 an den Tellerfederzungen 6, einer Teilung der Wälzlagerfunktion und einem ersten Federelement 9 einen ständig geschlossenen Kraftfluss zwischen den Bauteilen ermöglicht. Somit kann eine Betätigung einer Kupplung im Push-Pull-Betrieb realisiert werden.

### Bezugszeichenliste

- 1: Betätigungslager
- 2: Lageraußenring
- 2.1: Lauffläche des Lageraußenrings 2
- 2a: radial innen liegender Außenring
- 2b: radial außen liegender Außenring
- 3: Lagerinnenring
- 3.1: Lauffläche des Lagerinnenrings 3
- 3a: radial innen liegender Innenring
- 3b: radial außen liegender Innenring
- 4: Wälzkörper
- 5: Gehäuse
- 6: Tellerfederzungen
- 6.1: erste Seite der Tellerfederzungen 6
- 6.2: zweite Seite der Tellerfederzungen
- 7: erster Druckring
- 8: zweiter Druckring
- 8.1: Lauffläche des zweiten Druckrings 8
- 8': Anschlag
- 9: erste Feder
- 10: erstes Schrägkugellager
- 11: zweites Schrägkugellager
- 12: Axialnadellager
- 13: zweite Feder
- A: Längsachse
- Fₚᵤₛₕ: eingeleitete Kraft bei drückender Betätigung
- Fₚᵤₗₗ: eingeleitete Kraft bei ziehender Betätigung
- FBₚᵤₛₕ: Betätigungskraft bei drückender Betätigung
- FBₚᵤₗₗ: Betätigungskraft bei ziehender Betätigung

## Patentansprüche

1. Ausrücksystem zur Betätigung einer Kupplung, insbesondere für eine zwischen einem Motor und einem Getriebe vorzusehende Reibungskupplung, mit einem Betätigungslager (1), zur Betätigung der Kupplungsbetätigungsmittel, wie einer Tellerfeder/Tellerfederzungen (6), wobei das Betätigungslager (1) sich an einem Gehäuse (5) abstützt und einen Lageraußenring (2), einen Lagerinnenring (3) und dazwischen angeordnete Wälzkörper (4) sowie einen ersten Druckring (7) aufweist, der an einer ersten Seite (6.1) der Tellerfederzungen (6) anliegt, **dadurch gekennzeichnet, dass** das Betätigungslager (1) in Richtung zur zweiten Seite (6.2) der Tellerfederzungen (6) einen Anschlag und zwischen dem Anschlag und der zweiten Seite (6.1, 6.2) eine erste Feder (9) aufweist derart, dass die Tellerfederzungen (6) beidseitig abgestützt sind.

2. Ausrücksystem nach Anspruch 1, **dadurch gekennzeichnet, dass** der der Anschlag an einem zweiten Druckring (8) ausgebildet ist, der auf der Druckseite/zweiten Seite (2.2) der Tellerfederzungen (6) angeordnet ist und dass zwischen dem zweiten Druckring (8) und der zweiten Seite (6.2) der Tellerfederzungen (6) die erste Feder (9) angeordnet ist, die sich am zweiten Druckring (8) und an den Tellerfederzungen (6) abstützt.

3. Ausrücksystem nach Anspruch 1 oder 2, **dadurch gekennzeichnet, dass** die Wälzkörper (4) in wenigstens einem Wälzlager aufgenommen sind, wobei vorteilhafter Weise über die erste Feder (9) eine Vorlast auf das/die Wälzlager wirkt.

4. Ausrücksystem nach einem der Ansprüche 1 bis 3, **dadurch gekennzeichnet, dass** der erste Druckring (7), die erste Feder (9) und der zweite Druckring (8) auf dem Lagerinnenring (3) des Betätigungslagers (1) sitzen und dass der Lageraußenring (3) des Betätigungslagers (1) mit dem Gehäuse (5) verbunden ist.

5. Ausrücksystem nach einem der Ansprüche 1 bis 4, **dadurch gekennzeichnet, dass** der erste und zweite Druckring (7, 8) durch einen axialen Anschlag in einer festen Distanz zueinander angeordnet sind.

6. Ausrücksystem nach einem der Ansprüche 1 bis 5, **dadurch gekennzeichnet, dass** zwischen Lageraußenring (2) und Lagerinnenring (1) wenigstens ein erstes Schrägkugellager (10) ausgebildet ist.

7. Ausrücksystem nach einem der Ansprüche 1 bis 6, **dadurch gekennzeichnet, dass** der zweite Druckring (8) auf ein zweites Wälzlager in Form eines zweiten Schrägkugellagers (11) oder eines Axialnadellagers (12) wirkt.

8. Ausrücksystem nach einem der Ansprüche 1 bis 7, **dadurch gekennzeichnet, dass** der Lagerinnenring (3) des Betätigungslagers (1) in einen radial innen liegenden Innenring (3a) und einen radial außen liegenden Innenring (3b) geteilt ist und dass der radial außen liegende Innenring (3b) gleichzeitig den zweiten Druckring (8) bildet, an dem sich die erste Feder (9) abstützt und auch Teil des Wälzlagers ist.

9. Ausrücksystem nach einem der Ansprüche 1 bis 8, **dadurch gekennzeichnet, dass** der zweite Druckring (8) und die erste Feder (9) einteilig ausgebildet sind.

10. Ausrücksystem nach einem der Ansprüche 1 bis 9, **dadurch gekennzeichnet, dass** der Lageraußenring (2) des Betätigungslagers (1) in einen radial innen liegenden Außenring (2a) und einen radial außen liegenden Außenring (2b) geteilt ist und dass auf den radial innen liegenden Außenring (2a) eine zweite Feder (13) wirkt, die sich am Gehäuse (5) abstützt.
